# EUROPEAN PATENT APPLICATION

(11) **EP 4 597 641 A1**
(43) Date of publication of application: **06.08.2025**
(21) Application number: 23885920.1
(22) Date of filing: 01.06.2023
(51) Int. Cl.: H01M 4/66, H01M 10/052, H01M 4/02

(54) **POSITIVE ELECTRODE CURRENT COLLECTOR FOR LITHIUM SECONDARY BATTERY, PREPARATION METHOD THEREFOR, AND LITHIUM SECONDARY BATTERY COMPRISING SAME**

(30) Priority: 31.10.2022 KR 20220143038
(71) Applicant: SK On Co., Ltd., Seoul 03161 (KR)
(72) Inventor: HWANG, Chang Mook, Daejeon 34124 (KR); KIM, Hyun Ji, Daejeon 34124 (KR); LEE, Jong Hyeok, Daejeon 34124 (KR); JO, Yoon Ji, Daejeon 34124 (KR)
(74) Representative: Prüfer & Partner mbB Patentanwälte · Rechtsanwälte
(86) International application number: PCT/KR2023/007499
(87) International publication number: WO 2024/096222

(57) **Abstract**

A cathode current collector for a lithium secondary battery according to embodiments of the present disclosure may include an aluminum layer, aluminum-copper alloy layers formed on the aluminum layer, and copper layers formed on the aluminum-copper alloy layer. Accordingly, even when a high-density cathode active material layer is formed on the cathode current collector, deformation or fracture of the cathode current collector may be prevented, thereby improving the cycle life of the secondary battery.

## Description

### [Technical Field]

The present disclosure relates to a positive electrode ("cathode") current collector for a lithium secondary battery, a method of preparing the cathode current collector for a lithium secondary battery, and a lithium secondary battery including the cathode current collector for a lithium secondary battery.

### [Background Art]

A secondary battery is a battery that can be repeatedly charged and discharged. With rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

In the lithium secondary battery, the cathode may be formed by applying a cathode active material to a cathode current collector, followed by drying and pressing the same. When the cathode active material is filled at a high density, the lithium secondary battery may exhibit high capacity and high output characteristics.

However, when increasing the density of the cathode active material, deformation such as wrinkling may occur in the cathode current collector due to expansion and contraction of the cathode active material layer during charging and discharging cycles, or the cathode current collector may be fractured.

For example, Korean Patent Registration No. 10-2283842 discloses an electrode current collector for a lithium secondary battery including a novel conductive material.

### [Summary of Invention]

### [Problems to be Solved by Invention]

An object of the present disclosure is to provide a cathode current collector for a lithium secondary battery with improved durability.

Another object of the present disclosure is to provide a method of preparing the cathode current collector for a lithium secondary battery.

In addition, another object of the present disclosure is to provide a lithium secondary battery including the cathode current collector for a lithium secondary battery.

### [Means for Solving Problems]

A cathode current collector for a lithium secondary battery according to exemplary embodiments may include: an aluminum layer; an aluminum-copper alloy layer formed on at least one surface of the aluminum layer; and a copper layer formed on the aluminum-copper alloy layer.

In some embodiments, the aluminum-copper alloy layer may include at least one of Al₂Cu, AlCu and AlCu₂.

In some embodiments, the aluminum-copper alloy layer may include an AlCu-containing layer.

In some embodiments, the aluminum-copper alloy layer may include a stacked structure including an Al₂Cu-containing layer and an AlCu-containing layer.

In some embodiments, the Al₂Cu-containing layer and the AlCu-containing layer may be sequentially disposed from the aluminum layer.

In some embodiments, the aluminum-copper alloy layer may include a stacked structure including an Al₂Cu-containing layer, an AlCu-containing layer and an AlCu₂-containing layer.

In some embodiments, the Al₂Cu-containing layer, the AlCu-containing layer and the AlCu₂-containing layer may be sequentially disposed from the aluminum layer.

In some embodiments, an atomic percentage (%) of copper of the aluminum-copper alloy layer may increase toward the copper layer.

In some embodiments, the aluminum layer may have a thickness of 3 µm to 20 µm, the copper layer may have a thickness of 1 µm to 15 µm, and the aluminum-copper alloy layer may have a thickness of 0.1 µm to 3 µm.

In some embodiments, the aluminum-copper alloy layers and the copper layers may be sequentially disposed on both surfaces of the aluminum layer.

In some embodiments, the aluminum-copper alloy layers and the aluminum layers may be sequentially disposed on both surfaces of the copper layer.

A lithium secondary battery according to exemplary embodiments may include: a cathode which includes the cathode current collector and a cathode active material layer formed on at least one surface of the cathode current collector; and an anode disposed to face the cathode.

A method of preparing a cathode current collector for a lithium secondary battery according to exemplary embodiments may include: hot rolling a copper foil onto an aluminum foil to form a first preliminary current collector including an aluminum-copper alloy layer; and heat treating the first preliminary current collector.

In some embodiments, the aluminum-copper alloy layer may be formed between the aluminum foil and the copper foil.

In some embodiments, the step of forming the first preliminary current collector may include: rolling the aluminum foil and the copper foil to form a first preliminary alloy layer; hot rolling the first preliminary alloy layer to form a second preliminary alloy layer including an aluminum-copper alloy layer; and homogenizing the second preliminary alloy layer to form the aluminum-copper alloy layer.

In some embodiments, the step of heat treating the first preliminary current collector may include: first cold rolling the first preliminary current collector to form a second preliminary current collector; performing a first annealing process on the second preliminary current collector to form a third preliminary current collector; second cold rolling the third preliminary current collector to form a fourth preliminary current collector; and performing a second annealing process on the fourth preliminary current collector to form the cathode current collector.

In some embodiments, the second annealing process may include cooling the fourth preliminary current collector to 25°C.

### [Advantageous effects]

According to exemplary embodiments, the cathode current collector for a lithium secondary battery may include an aluminum layer, an aluminum-copper alloy layer and a copper layer. Accordingly, the cathode current collector may maintain high electrical conductivity even when its thickness is reduced, thereby improving the energy density of the secondary battery.

In addition, even when a high-density active material layer is formed on the cathode current collector, deformation or fracture of the cathode current collector may be prevented by the copper layer having a high theoretical capacity.

In some embodiments, the composition of the aluminum-copper alloy of the aluminum-copper alloy layer may be sequentially changed. Accordingly, the aluminum-copper alloy layer may serve as a buffer layer between the aluminum layer and the copper layer to prevent the separation caused by rapid change in composition.

### [Brief Description of Drawings]

FIGS. 1 to 5 are schematic cross-sectional views illustrating cathode current collectors for a lithium secondary battery according to exemplary embodiments.
FIGS. 6 and 7 are schematic flowcharts for describing a method of preparing a cathode current collector for a lithium secondary battery according to exemplary embodiments.
FIG. 8 is a schematic cross-sectional view illustrating a cathode for a lithium secondary battery according to exemplary embodiments.
FIGS. 9 and 10 are a schematic plan view and a cross-sectional view illustrating a lithium secondary battery according to exemplary embodiments.

### [Mode for Carrying out Invention]

Exemplary embodiments of the present disclosure provide a cathode current collector for a lithium secondary battery including aluminum and copper, and a method of preparing the same. In addition, a lithium secondary battery including the cathode current collector for a lithium secondary battery is also provided.

Hereinafter, the embodiments of the present invention will be described in detail with reference to the accompanying drawings. However, since the drawings attached to the present disclosure are only given for illustrating one of several preferred embodiments of present invention to easily understand the technical spirit of the present invention with the above-described invention, it should not be construed as limited to such a description illustrated in the drawings.

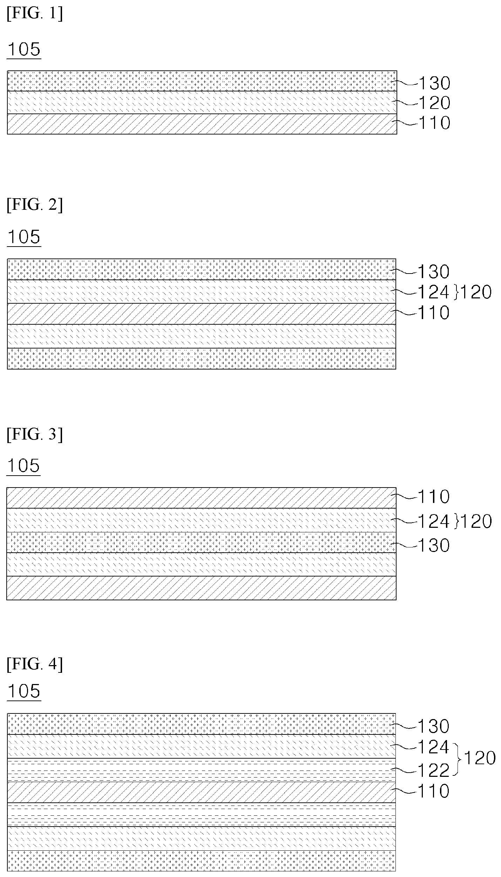

FIGS. 1 to 5 are schematic cross-sectional views illustrating cathode current collectors for a lithium secondary battery according to exemplary embodiments.

Referring to FIG. 1, a cathode current collector 105 according to an embodiment may include an aluminum (Al) layer 110, an aluminum-copper alloy layer 120 formed on the aluminum layer 110, and a copper (Cu) layer 130 formed on the aluminum-copper alloy layer 120.

Accordingly, the cathode current collector 105 may maintain high electrical conductivity even when its thickness is reduced, thereby improving the energy density of the cathode 100. In addition, by arranging copper having a high theoretical capacity in the outmost layer, even when a high-density cathode active material layer is formed on the cathode current collector 105, deformation and fracture of the cathode current collector 105 may be suppressed.

Referring to FIG. 2, a cathode current collector 105 according to another embodiment may include an aluminum layer 110, aluminum-copper alloy layers 120 formed on both surfaces of the aluminum layer 110, and copper layers 130 respectively formed on the aluminum-copper alloy layers 120.

Accordingly, the cathode current collector 105 may not undergo fracture, even when a high-density active material layer is formed thereon.

In some embodiments, the positions of the copper layer 130 and the aluminum layer 110 may be changed, that is, their arrangement may be reversed.

Referring to FIG. 3, a cathode current collector 105 according to another embodiment may include a copper layer 130, aluminum-copper alloy layers 120 formed on both surfaces of the copper layer 130, and aluminum layers 110 respectively formed on the aluminum-copper alloy layers 120.

Accordingly, the electrical conductivity of the cathode current collector 105 may be improved, and price competitiveness may be secured.

According to exemplary embodiments, the aluminum-copper alloy layer 120 may include at least one of Al₂Cu, AlCu and AlCu₂. For example, the aluminum-copper alloy of the aluminum-copper alloy layer 120 may include at least one of alloys represented by Al₂Cu, AlCu and AlCu₂.

In some embodiments, the aluminum-alloy layer 120 may have a single composition. For example, the aluminum-alloy layer 120 may be formed as a single layer containing AlCu.

In some embodiments, the composition of the aluminum-copper alloy in the aluminum-copper alloy layer 120 may sequentially change. For example, the aluminum and copper concentrations in the aluminum-copper alloy layer 120 may change from the aluminum layer 110 toward the copper layer 130. The term "concentration" as used herein may refer to, for example, a molar ratio or an atomic percentage (%) of aluminum to copper.

In some embodiments, the copper concentration in the aluminum-copper alloy layer 120 may increase toward the copper layer 130. In some embodiments, the aluminum concentration in the aluminum-copper alloy layer 120 may decrease toward the copper layer 130.

Referring to FIG. 4, the aluminum-copper alloy of an aluminum-copper alloy layer 120 in a cathode current collector 105 according to another embodiment may contain an alloy represented by Al₂Cu and AlCu.

According to exemplary embodiments, the aluminum-copper alloy layer 120 may include a stacked structure including an Al₂Cu-containing layer 122 and an AlCu-containing layer 124.

In some embodiments, the aluminum-copper alloy layer 120 may include the Al₂Cu-containing layer 122, the AlCu-containing layer 124 sequentially disposed from the aluminum layer 110. For example, the cathode current collector 105 may include an aluminum layer 110, the Al₂Cu-containing layers 122 formed on both surfaces of the aluminum layer 110, the AlCu-containing layers 124 formed on the Al₂Cu-containing layers 122, and copper layers 130 formed on the AlCu-containing layers 124.

Accordingly, deformation and fracture of the cathode current collector 105 may be prevented, and the energy density of the cathode may be improved.

In some embodiments, the aluminum-copper alloy layer 120 may include an AlCu₂-containing layer 126 and the AlCu-containing layer 124, which are sequentially disposed from the copper layer 130. For example, the cathode current collector 105 may include a copper layer 130, the AlCu₂-containing layers 126 formed on both surfaces of the copper layer 130, the AlCu-containing layers 124 formed on the AlCu₂-containing layers 126, and aluminum layers 110 formed on the AlCu-containing layers 124.

Accordingly, deformation and fracture of the cathode current collector 105 may be prevented, and the energy density of the cathode may be improved.

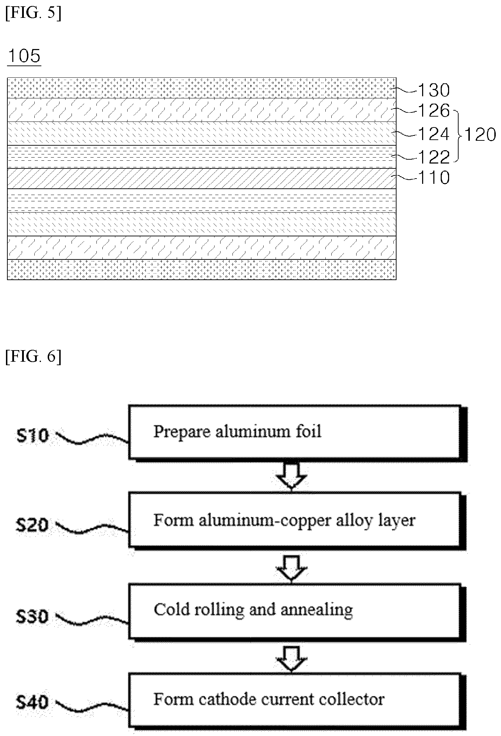

Referring to FIG. 5, the aluminum-copper alloy of an aluminum-copper alloy layer 120 in a cathode current collector 105 according to another embodiment may include alloys represented by Al₂Cu, AlCu and AlCu₂.

According to exemplary embodiments, the aluminum-copper alloy layer 120 may include a stacked structure including an Al₂Cu-containing layer 122, an AlCu-containing layer 124 and an AlCu₂-containing layer 126.

In some embodiments, the Al₂Cu-containing layer 122, the AlCu-containing layer 124, and the AlCu₂-containing layer 126 may be sequentially disposed from the aluminum layer 110. For example, the cathode current collector 105 may include an aluminum layer 110, the Al₂Cu-containing layers 122 formed on both surfaces of the aluminum layer 110, the AlCu-containing layers 124 formed on the Al₂Cu-containing layers 122, AlCu₂-containing layers 126 formed on the AlCu-containing layers 124, and copper layers 130 formed on the AlCu₂-containing layers 126.

The aluminum-copper alloy layer 120 including the Al₂Cu-containing layer 122, the AlCu-containing layer 124 and the AlCu₂-containing layer 126 may implement a gradual change in alloy composition with respect to the difference in composition between the aluminum layer 110 and the copper layer 130.

Accordingly, the aluminum-copper alloy layer 120 may serve as a buffer layer for the change in composition between the aluminum layer 110 and the copper layer 130, and may prevent the separation between the aluminum layer 110 and the copper layer 130.

In some embodiments, the AlCu₂-containing layer 126, the AlCu-containing layer 124, and the Al₂Cu-containing layer 122 may be sequentially disposed from the copper layer 130. For example, the cathode current collector 105 may include a copper layer 130, AlCu₂-containing layers 126 formed on both surfaces of the copper layer 130, AlCu-containing layers 124 formed on the AlCu₂-containing layers 126, Al₂Cu-containing layers 122 formed on the AlCu-containing layers 124, and aluminum layers 110 formed on the Al₂Cu-containing layers 122.

Accordingly, even when the copper layer 130 is arranged between the aluminum layers 110, separation due to gradual change in composition may be prevented.

In some embodiments, the aluminum layer 110 may have a thickness of 3 µm to 20 µm, 3 µm to 15 µm, or 4 µm to 10 µm. Within the above range, even when the copper layer 130 is formed, the thickness of the cathode current collector 105 may remain within an acceptable range without becoming excessively thick.

In some embodiments, the aluminum-copper alloy layer 120 may have a thickness of 0.1 µm to 3 µm, or 0.5 µm to 1.5 µm. Within the above range, this layer may sufficiently serve as a buffer layer for the change in composition between the aluminum layer 110 and the copper layer 130.

In some embodiments, the copper layer 130 may have a thickness of 1 µm to 15 µm, 1 µm to 10 µm, or 3 µm to 7 µm. Within the above range, while the price competitiveness of the cathode current collector 105 is secured, deformation or fracture of the cathode current collector 105 may be suppressed due to the high theoretical capacity of the copper layer 130 even when a high-density active material layer is formed thereon.

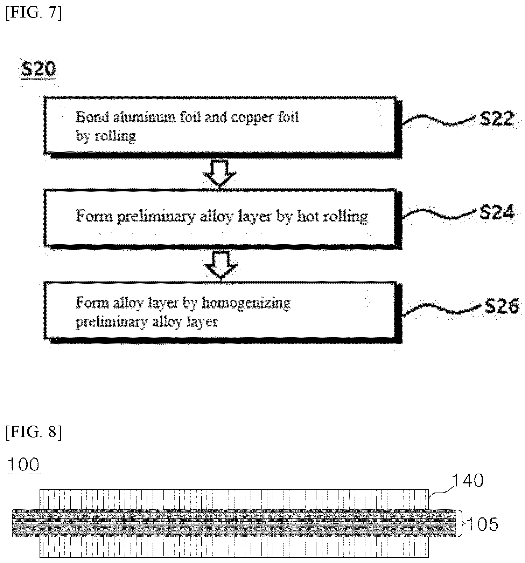

FIG. 6 and FIG. 7 are schematic flowcharts for describing a method of preparing a cathode current collector for a lithium secondary battery according to exemplary embodiments. FIG. 7 is a detailed flowchart of process S20 in FIG. 6.

Referring to FIGS. 6 and 7, an aluminum foil may be prepared (e.g., process S10).

According to exemplary embodiments, an aluminum foil may be prepared by homogenizing and hot rolling an aluminum ingot.

In one embodiment, the aluminum ingot may be cast from an aluminum alloy.

An aluminum alloy may be melted by putting it into a melting furnace and heating it to a temperature equal to or higher than the melting point of aluminum. For example, the aluminum alloy may be heated to 700°C or higher, or 800°C or higher to melt the aluminum in the aluminum alloy. The molten aluminum may be put into a mold, and the mold may be cooled to a temperature equal to or lower than the melting point of aluminum. Accordingly, a high-purity aluminum ingot may be cast from the aluminum alloy.

In some embodiments, the aluminum ingot may be heat treated to achieve homogenization.

For example, the aluminum ingot may be heat treated at 350°C to 600°C, or 400°C to 550°C to achieve homogenization of the aluminum ingot. Within the above range, segregation within the aluminum crystal grains may be effectively removed, and the aluminum crystal grains may be refined.

In some embodiments, the homogenized aluminum ingot may be hot rolled to prepare an aluminum foil.

For example, the homogenized aluminum ingot may be heat treated at 350°C to 500°C, or 400°C to 450°C, followed by hot rolling. Within the above range, the aluminum crystal grains may be recrystallized without segregation being formed within the aluminum crystal grains, thereby forming an aluminum foil.

According to exemplary embodiments, a copper foil may be bonded to the aluminum foil prepared through the above-described process, followed by hot rolling and homogenization, to form a first preliminary current collector including an aluminum-copper alloy layer (e.g., process S20).

In some embodiments, a copper foil may be placed on the aluminum foil, and then rolled to form a first preliminary alloy layer (e.g., process S22).

For example, a copper foil may be placed on the aluminum foil, and then the aluminum foil and the copper foil may be bonded using a roll-to-roll process. The roll-to-roll process may be performed at, for example, 250°C to 450°C, or 300°C to 400°C. Within the above range, the aluminum foil and the copper foil may be recrystallized and bonded without cracks caused by excessive high or low temperatures.

In some embodiments, the first preliminary alloy layer may be hot rolled to form a second preliminary alloy layer (e.g., process S24).

The first preliminary alloy layer is hot rolled, such that aluminum and copper may be recrystallized at a portion where the aluminum foil and the copper foil come into contact. Through the recrystallization of aluminum and copper, an aluminum-copper alloy, for example, represented by Al₂Cu, AlCu and/or AlCu₂, may be formed.

For example, the aluminum foil and copper foil bonded at 500°C to 700°C, or 550°C to 650°C may be heat treated to initiate hot rolling. Within the above range, the aluminum foil and the copper foil may undergo recrystallization without melting, thereby forming an aluminum-copper alloy.

For example, hot rolling may be completed at 300°C to 450°C, or 300°C to 400°C. Within the above range, recrystallization may be completed without generating ridging marks, thereby forming an aluminum-copper alloy.

In some embodiments, the second preliminary alloy layer may be subjected to homogenization to form a first preliminary current collector including an aluminum-copper alloy layer (e.g., process S26).

For example, the first preliminary current collector including the preliminary aluminum-copper alloy layer may be heat treated at 300°C to 500°C, or 400°C to 450°C to initiate homogenization. Within the above range, recrystallization may proceed without causing segregation in the aluminum-copper alloy.

For example, the first preliminary current collector including the preliminary aluminum-copper alloy layer may be heat treated at 250°C to 450°C, or 300°C to 400°C, to complete homogenization. Within the above range, recrystallization may be completed without generating ridging marks, thereby forming the first preliminary current collector including the aluminum-copper alloy layer.

According to exemplary embodiments, the first preliminary current collector may be heat treated to prepare the cathode current collector 105 (e.g., processes S30 and S40).

In some embodiments, the first preliminary current collector may be first cold rolled to form a second preliminary current collector having a reduced thickness.

For example, a ratio of the thickness of the second preliminary current collector to the thickness of the first preliminary current collector may be 0.4 to 0.6, or 0.45 to 0.55. Accordingly, the second preliminary current collector may be formed while preventing the formation of cracks caused by excessive rolling.

For example, the first cold rolling may be performed at 10°C to 120°C, or 25°C to 100°C. Within the above range, the mechanical strength and hardness of the second preliminary current collector may be improved.

In some embodiments, the second preliminary current collector may be subjected to a first annealing process to form a third preliminary current collector.

For example, the first annealing process may be performed on the second preliminary current collector at 300°C to 450°C, or 350°C to 400°C. Within the above range, the internal stress of the second preliminary current collector may be removed and softened.

For example, the first annealing process may be performed on the second preliminary current collector for 1 hour to 3 hours, or 1 hour to 2 hours, for example. Within the above range, both the copper and aluminum-copper alloys may be annealed and softened.

In some embodiments, the third preliminary current collector may be second cold rolled to form a fourth preliminary current collector having a reduced thickness.

For example, a ratio of the thickness of the fourth preliminary current collector to the thickness of the first preliminary current collector may be 0.02 to 0.1, or 0.04 to 0.06. Accordingly, a fourth preliminary current collector having a reduced thickness with improved mechanical strength may be formed.

For example, the second cold rolling may be performed at 10°C to 120°C, or 25°C to 100°C. Within the above range, the mechanical strength and hardness of the fourth preliminary current collector may be improved.

In some embodiments, the second annealing may be performed on the fourth preliminary current collector to form the cathode current collector 105.

For instance, the second annealing process may be performed on the fourth preliminary current collector at, for example, 200°C to 450°C, or 200°C to 400°C. Within the above range, the internal stress of the fourth preliminary current collector may be removed and softened, and metal crystals may be refined.

For example, the second annealing process may be performed on the fourth preliminary current collector, for example, for 3 hours to 24 hours, or 5 hours to 20 hours. Within the above range, aluminum, aluminum-copper alloy, and copper may be sufficiently annealed and softened, and impurities (e.g., rolling oil) may be volatilized and removed.

In some embodiments, the fourth preliminary current collector may be cooled to room temperature (25°C) at a rate, for example, of 40°C/hr to 60°C/hr, or 45°C/hr to 55°C/hr to form the cathode current collector 105. Accordingly, the ductility and strength of the cathode current collector 105 may be improved.

FIG. 8 is a schematic cross-sectional view illustrating a cathode for a lithium secondary battery according to exemplary embodiments.

Referring to FIG. 8, a cathode 100 may include a cathode current collector 105 and a cathode active material layer 140 formed by applying a cathode active material to the cathode current collector 105.

The cathode 100 may be prepared by coating the cathode current collector 105 with a cathode slurry, followed by compression and drying. The cathode slurry may be prepared by mixing and stirring the cathode active material with a binder, a conductive material and/or a dispersant in a solvent.

According to exemplary embodiments, the cathode current collector 105 may include the above-described aluminum layer 110, the aluminum-copper alloy layer 120 and the copper layer 130.

In some embodiments, the aluminum-copper alloy layer 120 may include the Al₂Cu-containing layer 122, the AlCu-containing layer 124, and/or the AlCu₂-containing layer 126. Accordingly, even when the amount of the cathode active material included in the cathode active material layer 140 increases, an occurrence of the deformation and fracture of the cathode current collector 105 may be prevented.

According to exemplary embodiments, the cathode active material may include a compound capable of reversibly intercalating and deintercalating lithium ions. The cathode active material may include lithium-transition metal composite oxide particles. For example, the lithium-transition metal composite oxide particles include nickel (Ni), and may further include at least one of cobalt (Co) and manganese (Mn).

For example, the lithium-transition metal composite oxide particles may be represented by Formula 1 below.

[Formula 1] LiₓNi_{1-y}M_{y}O_{2+z}

In Formula 1, x may be in a range of 0.9≤x≤1.1, y may be in a range of 0≤y≤0.7, and z may be in a range of -0.1≤z≤0.1. M may represent one or more elements selected from Na, Mg, Ca, Y, Ti, Zr, Hf, V, Nb, Ta, Cr, Mo, W, Mn, Co, Fe, Cu, Ag, Zn, B, Al, Ga, C, Si, Sn or Zr.

The cathode binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or aqueous binder such as styrene-butadiene rubber (SBR), and may be used together with a thickener such as carboxymethyl cellulose (CMC).

For example, a PVDF-based binder may be used as the cathode binder. In this case, an amount of the binder for forming the cathode active material layer may be reduced and an amount of the cathode active material may be relatively increased, thereby improving the output and capacity of the secondary battery.

The conductive material may be included to facilitate electron transfer between the active material particles. For example, the conductive material may include a carbon-based conductive material such as graphite, carbon black, graphene, or carbon nanotubes and/or a metal-based conductive material including tin, tin oxide, titanium oxide, or a perovskite material such as LaSrCoO₃, and LaSrMnO₃, etc.

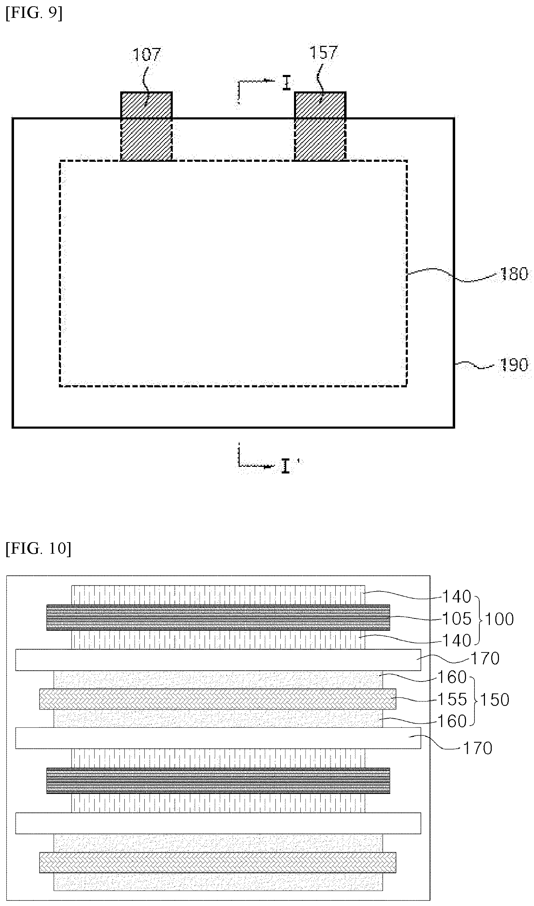

FIGS. 9 and 10 are a schematic plan view and a cross-sectional view illustrating a lithium secondary battery according to exemplary embodiments, respectively. FIG. 10 is a cross-sectional view taken on line I-I' in FIG. 9 in a thickness direction of the battery.

Referring to FIGS. 9 and 10, the lithium secondary battery may include the cathode 100 including the above-described cathode current collector 105 and an anode 150 disposed to face the cathode.

According to exemplary embodiments, the anode 150 may include an anode current collector 155 and an anode active material layer 160 formed by coating the anode current collector 155 with an anode active material.

The anode active material usable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; a silicon (Si) compound or tin, etc. may be used. Examples of the amorphous carbon may include hard carbon, cokes, mesocarbon microbead (MCMB) calcined at 1500°C or lower, mesophase pitch-based carbon fiber (MPCF) or the like.

Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicon, lead, tin, gallium or indium, etc.

The silicon-based active material may include SiOₓ (0<x<2) or SiOₓ (0<x<2) containing a lithium compound. The SiOₓ containing the Li compound may be SiOₓ including lithium silicate. The lithium silicate may be present in at least a portion of SiOₓ (0<x<2) particles, for example, may be present inside and/or on the surface of the SiOₓ (0<x<2) particles. In one embodiment, the lithium silicate may include Li₂SiO₃, Li₂Si₂O₅, Li₄SiO₄, Li₄Si₃O₈, etc.

The silicon-based active material may also include a silicon-carbon composite compound such as silicon carbide (SiC).

The anode current collector 155 may include, for example, gold, stainless steel, nickel, aluminum, titanium, copper or an alloy thereof, and in one embodiment, the anode current collector 155 may include copper or a copper alloy.

For example, a slurry may be prepared by mixing the anode active material with the above-described binder, conductive material, thickener, and the like in a solvent, and stirring the mixture. The slurry may be applied to at least one surface of the anode current collector 155, followed by compression and drying the same to prepare the anode 150 including the anode active material layer 160.

As the binder and the conductive material, materials which are substantially the same as or similar to the above-described materials may be used. **In** some embodiments, a binder for forming an anode may include, for example, an aqueous binder such as styrene-butadiene rubber (SBR) to ensure compatibility with a carbon-based active material, and may be used together with a thickener such as carboxymethyl cellulose (CMC).

In some embodiments, a separation membrane 170 may be interposed between the cathode 100 and the anode 150. The separation membrane 170 may include a porous polymer film made of a polyolefin polymer such as ethylene homopolymer, propylene homopolymer, ethylene/butene copolymer, ethylene/hexene copolymer, ethylene/methacrylate copolymer. The separation membrane 170 may include a nonwoven fabric made of glass fibers having a high melting point, polyethylene terephthalate fibers, etc.

In some embodiments, the anode 150 may have an area (e.g., a contact area with the separation membrane 170) and/or volume larger than those/that of the cathode 100. Thereby, lithium ions generated from the cathode 100 may smoothly migrate to the anode 150 without being precipitated during the process, for example. Accordingly, the effect of simultaneous improvement of output and stability through combination with the above-described composite hydroxide particles or cathode active material may be more easily implemented.

According to exemplary embodiments, an electrode cell is defined by the cathode 100, the anode 150 and the separation membrane 170, and a plurality of electrode cells may be stacked to form an electrode assembly 180.

The electrode assembly 180 may be housed together with an electrolyte in an outer case 190 to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, γ-butyrolactone, propylene sulfite, tetrahydrofuran, and the like may be used. These compounds may be used alone or in combination of two or more thereof.

As shown in FIG. 9, electrode tabs (a cathode tab and an anode tab) may protrude from the cathode current collector 105 and the anode current collector 155, respectively, which belong to each electrode cell, and may extend to one side of the case 190. The electrode tabs may be fused together with the one side of the case 190 to form electrode leads (a cathode lead 107 and an anode lead 157) extending or exposed to the outside of the case 190.

The lithium secondary battery may be manufactured, for example, in a cylindrical shape using a can, a prismatic shape, a pouch-type shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

### Examples and Comparative Examples

### Example 1

### 1) Preparation of cathode current collector

A cathode current collector (total thickness: 15 µm) was prepared by forming an aluminum layer having a thickness of 4 µm, aluminum-copper alloy layers each having a thickness of 1.5 µm on both surfaces of the aluminum layer, and copper layers each having a thickness of 4 µm on the aluminum-copper alloy layers.

Specifically, copper foils were bonded on both surfaces of an aluminum foil using a roll-to-roll process. A metal foil, in which the aluminum foil and the copper foil were bonded, was hot rolled at 600°C to form a preliminary aluminum-copper alloy layer through the recrystallization of aluminum and copper. An aluminum-copper alloy layer was formed by homogenizing and heat treating the preliminary aluminum-copper alloy layer at 450°C. Thereafter, the cold rolling and annealing processes were repeated twice to prepare a cathode current collector including an aluminum-copper alloy layer. The cathode current collector had a protrusion part on one side thereof for forming a cathode tab.

The aluminum-copper alloy layer was formed in the order of an Al₂Cu-containing layer, an AlCu-containing layer and an AlCu₂-containing layer from the aluminum layer at the center.

### 2) Preparation of cathode

LiNi_{0.6}Co_{0.2}Mn_{0.2}O₂ as a cathode active material, carbon black as a cathode conductive material, and polyvinylidene fluoride (PVDF) as a cathode binder were mixed in a weight ratio of 95:3:2 to prepare a cathode slurry, and then the cathode slurry was applied to a region of the cathode current collector except for the cathode tab bonding part, followed by drying and pressing the same, to form a cathode active material layer.

### 3) Preparation of anode

An anode active material obtained by mixing artificial graphite and natural graphite in a weight ratio of 7:3; styrene-butadiene rubber; and carboxymethyl cellulose were dispersed in distilled water in a weight ratio of 97:1:2 to prepare an anode slurry.

The anode slurry was applied to a region of a copper foil having a protrusion part (anode tab) except for the protrusion part, followed by drying and pressing the same, to prepare an anode.

### 4) Manufacture of lithium secondary battery

A polyethylene separation membrane (thickness: 20 µm) was interposed between the cathode and the anode to form a unit electrode assembly. An electrode assembly was formed by stacking the unit electrode assemblies to have a capacity of 80 Ah. A cathode lead and an anode lead were respectively welded and connected to the cathode tab and the anode tab.

A 1 M LiPF₆ solution (a mixed solvent of EC and EMC in a volume ratio of 30:70) was prepared, and then 1 wt% of fluoroethylene carbonate (FEC), 0.3 wt% of vinylethylene carbonate (VC), 1 wt% of lithium difluorophosphate (LiPO₂F₂), 0.5 wt% of 1,3-propane sultone (PS), and 0.5 wt% of prop-1-ene-1,3-sultone (PRS) were added thereto in the above-described contents based on 100 wt% of the total electrolyte, to prepare an electrolyte.

The electrode assembly was housed in a pouch (case) so that some regions of the cathode lead and the anode lead were exposed to the outside of the pouch, followed by sealing three sides of the pouch except for a side of an electrolyte injection part.

The electrolyte was injected into the pouch, and the side of the electrolyte injection part was sealed to manufacture a lithium secondary battery.

### Example 2

A lithium secondary battery was manufactured in the same manner as Example 1, except that a cathode current collector (thickness: 9 µm) was prepared by forming an aluminum layer having a thickness of 4 µm, aluminum-copper alloy layers each having a thickness of 1 µm on both surfaces of the aluminum layer, and copper layers each having a thickness of 1.5 µm on the aluminum-copper alloy layers.

### Example 3

A cathode current collector (thickness: 9 µm) was prepared by forming an aluminum layer having a thickness of 4 µm, aluminum-copper alloy layers each having a thickness of 1 µm on both surfaces of the aluminum layer, and copper layers each having a thickness of 1.5 µm on the aluminum-copper alloy layers.

A lithium secondary battery was manufactured in the same manner as in Example 1, except that a metal foil, to which the aluminum foil and the copper foil were bonded, was hot rolled at 500°C.

### Example 4

A cathode current collector (thickness: 9 µm) was prepared by forming an aluminum layer having a thickness of 4 µm, aluminum-copper alloy layers each having a thickness of 1 µm on both surfaces of the aluminum layer, and copper layers each having a thickness of 1.5 µm on the aluminum-copper alloy layers.

A lithium secondary battery was manufactured in the same manner as in Example 1, except that a metal foil, to which the aluminum foil and the copper foil were bonded, was hot rolled at 700°C.

### Example 5

A cathode current collector (thickness: 9 µm) was prepared by forming an aluminum layer having a thickness of 4 µm, aluminum-copper alloy layers each having a thickness of 1 µm on both surfaces of the aluminum layer, and copper layers each having a thickness of 1.5 µm on the aluminum-copper alloy layers.

A lithium secondary battery was manufactured in the same method as Example 1, except that the preliminary aluminum-copper alloy layer was homogenized and heat treated at 300°C.

### Example 6

A cathode current collector (thickness: 9 µm) was prepared by forming an aluminum layer having a thickness of 4 µm, aluminum-copper alloy layers each having a thickness of 1 µm on both surfaces of the aluminum layer, and copper layers each having a thickness of 1.5 µm on the aluminum-copper alloy layers.

A lithium secondary battery was manufactured in the same manner as in Example 1, except that the preliminary aluminum-copper alloy layer was homogenized and heat treated at 500°C.

### Comparative Example 1

A lithium secondary battery was manufactured in the same manner as in Example 1, except that an aluminum foil having a thickness of 15 µm was used as the cathode current collector.

### Comparative Example 2

A lithium secondary battery was manufactured in the same manner as in Example 1, except that an aluminum foil having a thickness of 9 µm was used as the cathode current collector.

### Experimental Example

### (1) Measurement of fracture rolling density

When preparing the cathode of a lithium secondary battery according to the examples and comparative examples, a cathode slurry was coated on the cathode current collector with a loading amount of 20 m g/cm². Thereafter, the cathode slurry was initially rolled at a density of 3.7 g/cm³, and if there was no fracture, the rolling density was increased by 0.05 g/cm³ at an interval of 100 m to measure the critical fracture density at which the first fracture occurred.

### (2) Measurement of resistance of the cathode current collector

A constant current was applied to the surface of the battery electrode, and a volume resistivity of a composite layer and an interfacial resistance between the composite layer and the collector were calculated from the potential distribution to measure an average resistance of the cathode current collector using an electrode resistance meter (Electrode Resistance Meter from HIOKI).

### (3) Measurement of cell resistance of secondary battery

At the point where the state of charge (SOC) of the secondary batteries according to the examples and comparative examples was set to 50%, a current of 1C was applied for 10 seconds, and the cell resistance was calculated through a change in voltage.

The evaluation results are shown in Table 1 below.

**[TABLE 1]**

| | Total thickness (µm) | Limit fracture density (g/cm³) | Cathode current collector resistance (mΩ) | Cell resistance (mΩ) |
|---|---|---|---|---|
| Example 1 | 15 | 3.9 | 9 | 0.98 |
| Example 2 | 9 | 3.85 | 12.6 | 1.12 |
| Example 3 | 9 | 3.75 | 12.6 | 1.12 |
| Example 4 | 9 | 3.85 | 12 | 1.1 |
| Example 5 | 9 | 3.85 | 13.8 | 1.16 |
| Example 6 | 9 | 3.85 | 13.5 | 1.15 |
| Comparative Example 1 | 15 | 3.8 | 12 | 1.1 |
| Comparative Example 2 | 9 | 3.7 | 14.5 | 1.21 |

Referring to Table 1, in the examples, which used a cathode current collector formed with an aluminum layer, aluminum-copper layers, and copper layers, the fracture rolling density and the adhesive strength were improved, and the resistance of the cathode current collector and the secondary battery was decreased. In examples 2 to 6 where the thickness of the copper layer was reduced, the fracture rolling density and the adhesive strength were slightly decreased, and the resistance of the cathode current collector and the secondary battery was slightly increased.

In example 3, where the hot rolling temperature was reduced, the fracture rolling density was slightly decreased.

In example 5, where the temperature of the homogenization heat treatment was reduced, the resistance of the cathode current collector and the secondary battery was slightly increased.

In Example 6, where the temperature of the homogenization heat treatment was increased, the resistance of the cathode current collector and the secondary battery was slightly increased.

Comparative Example 1, which used only aluminum foil as the cathode current collector, exhibited a decrease in the fracture rolling density and adhesive strength compared to Example 1 having the same thickness, and the resistance of the cathode current collector and the secondary battery was increased.

Comparative Example 2, which used only aluminum foil as the cathode current collector, exhibited a decrease in the fracture rolling density and adhesive strength compared to Example 2 having the same thickness, and the resistance of the cathode current collector and the secondary battery was increased.

## Claims

1. A cathode current collector for a lithium secondary battery comprising:
an aluminum layer;
an aluminum-copper alloy layer formed on at least one surface of the aluminum layer; and
a copper layer formed on the aluminum-copper alloy layer.

2. The cathode current collector for a lithium secondary battery according to claim 1, wherein the aluminum-copper alloy layer comprises at least one of Al₂Cu, AlCu and AlCu₂.

3. The cathode current collector for a lithium secondary battery according to claim 2, wherein the aluminum-copper alloy layer comprises an AlCu-containing layer.

4. The cathode current collector for a lithium secondary battery according to claim 2, wherein the aluminum-copper alloy layer comprises a stacked structure including an Al₂Cu-containing layer and an AlCu-containing layer.

5. The cathode current collector for a lithium secondary battery according to claim 4, wherein the Al₂Cu-containing layer and the AlCu-containing layer are sequentially disposed from the aluminum layer.

6. The cathode current collector for a lithium secondary battery according to claim 2, wherein the aluminum-copper alloy layer comprises a stacked structure including an Al₂Cu-containing layer, an AlCu-containing layer and an AlCu₂-containing layer.

7. The cathode current collector for a lithium secondary battery according to claim 6, wherein the Al₂Cu-containing layer, the AlCu-containing layer and the AlCu₂-containing layer are sequentially disposed from the aluminum layer.

8. The cathode current collector for a lithium secondary battery according to claim 1, wherein an atomic percentage (%) of copper of the aluminum-copper alloy layer increases toward the copper layer.

9. The cathode current collector for a lithium secondary battery according to claim 1, wherein the aluminum layer has a thickness of 3 µm to 20 µm,
the copper layer has a thickness of 1 µm to 15 µm, and
the aluminum-copper alloy layer has a thickness of 0.1 µm to 3 µm.

10. The cathode current collector for a lithium secondary battery according to claim 1, wherein the aluminum-copper alloy layers and the copper layers are sequentially disposed on both surfaces of the aluminum layer.

11. The cathode current collector for a lithium secondary battery according to claim 1, wherein the aluminum-copper alloy layers and the aluminum layers are sequentially disposed on both surfaces of the copper layer.

12. A lithium secondary battery comprising:
a cathode which comprises the cathode current collector according to claim 1 and a cathode active material layer formed on at least one surface of the cathode current collector; and
an anode disposed to face the cathode.

13. A method of preparing a cathode current collector for a lithium secondary battery comprising:
hot rolling an aluminum foil and a copper foil to form a first preliminary current collector comprising an aluminum-copper alloy layer; and
heat treating the first preliminary current collector.

14. The method of preparing a cathode current collector for a lithium secondary battery, wherein the aluminum-copper alloy layer is formed between the aluminum foil and the copper foil.

15. The method of preparing a cathode current collector for a lithium secondary battery according to claim 13, wherein the step of forming the first preliminary current collector comprises:
rolling the aluminum foil and the copper foil to form a first preliminary alloy layer;
hot rolling the first preliminary alloy layer to form a second preliminary alloy layer including an aluminum-copper alloy; and
homogenizing the second preliminary alloy layer to form the aluminum-copper alloy layer.

16. The method of preparing a cathode current collector for a lithium secondary battery according to claim 13, wherein the step of heat treating the first preliminary current collector comprises:
first cold rolling the first preliminary current collector to form a second preliminary current collector;
performing a first annealing process on the second preliminary current collector to form a third preliminary current collector;
second cold rolling the third preliminary current collector to form a fourth preliminary current collector; and
performing a second annealing process on the fourth preliminary current collector to form the cathode current collector.

17. The method of preparing a cathode current collector for a lithium secondary battery according to claim 16, wherein the second annealing process comprises cooling the fourth preliminary current collector to 25°C.
